# EUROPEAN PATENT APPLICATION

(11) **EP 4 579 211 A1**
(43) Date of publication of application: **02.07.2025**
(21) Application number: 23220857.9
(22) Date of filing: 29.12.2023
(51) Int. Cl.: G01N 15/0205, G01N 21/47, G01N 21/51

(54) **PARTICLE CHARACTERISATION**

(71) Applicant: Malvern Panalytical Limited, Malvern, Worcestershire WR14 1XZ (GB)
(72) Inventor: The designation of the inventor has not yet been filed
(74) Representative: Barker Brettell LLP

(57) **Abstract**

An apparatus (200) for particle characterisation, comprising: a sample cell (210) for holding a sample; a light source configured to illuminate the sample with an illuminating beam (220) and to produce scattered light (225) from the interaction between the illuminating beam (220) and the sample in a scattering volume; a plurality of light detectors (240), each light detector (240) configured to receive scattered light from a different detection region of the scattering volume along a respective detector path; a common lens (230) for each detector path configured to collect the scattered light (225); and a common aperture (250) arranged to couple light from each detector path to the corresponding light detector (240) and to define a range of scattering angles detected at each of the plurality of light detectors (240).

## Description

### Field

The present invention relates to an apparatus for particle characterisation, in particular to an apparatus for particle characterisation using light scattering.

### Background

Light scattering methods for particle characterisation, particularly dynamic light scattering (DLS), have been criticised for susceptibility to poor sample quality due to the R⁶ dependency of the strength of the scattered light (for a particle of radius R). Tiny fractions of aggregated material may dominate the measurement, with an attendant reduction in the accuracy of the size measurement of the much smaller, more weakly scattering fraction[s]. Significant efforts regarding sample preparation, filtering, and cleaning of equipment are typically required in order to accurately measure what are often very low concentrations of smaller protein fractions, so as to ensure that aggregated material or filter spoil is not present in the sample. Further, data rejection schemes are often used that simply reject data that is highly variable in count rate. The highly variable count rates arise when larger particles or aggregates are within the detection region (defined by the intersection of the illumination beam and detection beam), effectively ceasing acquisition of data until the aggregate or larger particle has moved out of the detection region within the sample. As such, using DLS requires a large amount of preparation and measurement time for potentially few measurements.

An apparatus for solving or ameliorating at least some of the above-mentioned problems is desirable.

### Summary

According to a first aspect of the present invention, there is provided an apparatus for particle characterisation. The apparatus comprises a sample cell for holding a sample; a light source configured to illuminate the sample with an illuminating beam and to produce scattered light from the interaction between the illuminating beam and the sample in a scattering volume; a plurality of light detectors, each light detector configured to receive scattered light from a different detection region of the scattering volume along a respective detector path. The apparatus further comprises a common lens for each detector path configured to collect the scattered light, and a common aperture (e.g. pinhole) arranged to couple light from each detector path to the corresponding light detector and to define a range of scattering angles detected at each of the plurality of light detectors.

Each light detector may thereby sample the same range of scattering angles from different spatial regions of the sample, which may enable certain advancements in particle characterisation, particularly in the context of dynamic light scattering.

Certain embodiments enable very high speed DLS measurements to be performed (especially on homogeneous samples). Where previously a sequence of sub-runs at different measurement times may have been combined to produce a measurement, each short sub-run may be obtained in parallel, enabling measurements of small particles (with short correlation in durations) with duration on the order of milliseconds or microseconds. The apparatus may be configured to perform a measurement in less than 100 milliseconds or less than 10 milliseconds, for example in a "fast measurement" mode that is suitable when it is known, a priori, that the sample comprises small particles (such as protein molecules).

In certain embodiments, the apparatus may be configured to perform differential dynamic microscopy, DDM.

The scattered light may be side-scattered light. "Side scattered light" refers to light scattered in a direction perpendicular to the propagation direction of the illumination beam.

Certain embodiments improve the control over the range of detected scattering angles. The common aperture may only allow light through the system if its scattering angle is within a narrow cone of angles. This fixed cone is the same for all positions in the sample. The axis of this cone of scattering angles may be parallel to an optical axis of the common lens (i.e. object-space telecentric), and the cone angle may be defined by the size of the common aperture and the focal length of the common lens. The overall magnification of the system may define the scattering volume (from which each detector receives scattered light). The angle subtended by the cone of scattered light that is received at each detector may be 5 degrees or less, or 2 degrees or less (measured within the sample).

The common aperture may be arranged on a back focal plane of the common lens, so that the apparatus is object-space telecentric.

The common lens may be a first common lens, and the apparatus may further comprise a second common lens for each detector path. The optical axis of the second common lens may be coincident with the optical axis of the first common lens. The first common lens may be positioned between the sample cell and the common aperture, with the second common lens positioned between the common aperture and the plurality of light detectors.

The common aperture may be arranged on a back focal plane of the first common lens and on a front focal plane of the second common lens, so that the apparatus is object-space telecentric and image-space telecentric.

The plurality of light detectors may comprise a 2D array of detectors arranged in a plane (referred to as a `detection plane').

Each light detector may collect light from one sharply defined detection region in the sample. The size and shape of each detection region is defined by the field window for each of the light detectors, and so the size of the scattering volume can be altered by changing the magnification of the optical path between the sample and the detector field window. This can be performed by changing the positions of the common lens and the light detectors relative to the sample, or by changing the power of the common lens.

The first common lens may be a "collection lens" - collecting the scattered light from the sample, and the second common lens may be an "imaging lens" - directing the scattered collected light to the detector (i.e. forming an image on the detector).

The first and second common lenses may be positioned such that a front focal plane of the first common lens is coincident with the scattering volume. A back focal plane of the second common lens may be coincident with a plane of the plurality of light detectors.

Introducing a second common lens with the common aperture at the front focal plane of the second common lens ensures that the light entering the plurality of light detectors is parallel to the optical axis of the system. This also affects the magnification of the image formed on the detectors - it becomes dependent on the ratio of focal lengths between the first and second common lenses, rather than positions of the lens and detector as in the single-lens system.

In the two-lens system, the common aperture does not change the detection region. This is controlled by the magnification ratio of the lens. This can be set to within 5% of a desired value, because focal lengths tend to vary by around 2.5%. The common aperture only alters the collection Numerical Aperture from the sample.

The apparatus may further comprise a further pair of common lenses for each detector path, positioned between the second common lens and the common aperture.

The further pair of common lenses may comprise a positive lens and a negative lens, positioned such that a back focal plane of the positive lens of the further pair of common lenses and a back focal plane of the negative lens of the further pair of common lenses are coincident.

This arrangement allows the proportions of the image to be altered (for use in applications where the sample and detector are not identical in size, for example). The further pair of commons lenses are between the first and second common lenses, in the infinite conjugate space between the lenses. This ensures that no astigmatism is added to the final image. The combination of the positive and negative lenses for magnification is known as a Galilean telescope, and gives angular magnification in one plane.

Alternatively, the further pair of common lenses may comprise a pair of positive lenses, arranged such that a back focal plane of one of the further pair of common lenses is coincident with a front focal plane of the other of the further pair of common lenses.

The combination of two positive lenses is known as a Keplerian telescope. This provides the same effect as the Galilean telescope, but forming the 'image' upside-down - the detector positions will be upside-down in the magnifying plane relative to the corresponding detection region. Since this is a non-imaging system, there are no issues with the position reversal.

Without either the Galilean pair or Keplerian pair of lenses, it would not be possible to form a stretched image where the system is both object- and image-space telecentric in both the x and y planes (taking the z plane to be the plane having the optical axis as its normal). While it would be possible to move the second common lens, or imaging lens, such that the x plane was telecentric, the y plane would no longer be telecentric.

The apparatus may further comprise a mask positioned on or adjacent to the plurality of light detectors, wherein the mask comprises a plurality of apertures, each aperture corresponding with a light detector and defining the size and shape of the detection region for the corresponding light detector.

Introducing a mask can increase the separation of the detection regions, or change the shape. Each detection region is defined by the field window of the corresponding light detector, which will then be the projection of the mask shape. Control over the size, shape and spacing over the detection regions can be achieved by changing the magnification ratios and selecting from a variety of mask shapes and sizes.

Each mask aperture may be smaller than the active area of each corresponding detector, so that the detection region for each detector is separated from the detection region of the adjacent detector.

A gap between the mask and the detectors may be present; and the size and shape of the mask apertures may be variable in response to an electronic control signal.

Mounting the mask and detectors such that there is a gap therebetween eliminates any potential electronic problems associated with having the mask touch or be in close proximity to the silicon surface.

A mechanism to vary the size and shape of the mask can be introduced if the distance is sufficiently large (i.e. if there is sufficient separation that interaction with the mask will not affect the plurality of detectors). The mask size may be varied with an electronic control signal and may utilise, for example, an LCD array. Alternatively, the mechanism may comprise two or more masks fixed on a rotating wheel or similar mechanical device, where the masks are replaceable by, for example, rotating said wheel.

The illuminating beam may comprise a sheet of light configured to illuminate a plane of the sample. This may increase the time efficiency of the measurement.

Controlling the size/shape of the illumination beam allows a user to control the size and shape of the scattering volume. Sample outside of the desired volume is not illuminated and so does not scatter light to the detector(s).

The plurality of light detectors may comprise a plurality of avalanche photodiodes (APDs), and optionally or preferably may comprise an array of APDs.

APDs provide higher sensitivity than standard photodiodes, and can be used for photon counting. A user can choose the number of pixels in the array to be input simultaneously to a correlator. For example, a single pixel could be correlated at a time, or a group of nine pixels in a square 3x3 grid could be summed and then sent to the correlator as a single photon train.

Each light detector may be configured to produce an intensity signal in response to the detected scattered light; and the apparatus may further comprise a processor. The processor may be configured to:
autocorrelate each intensity signal to produce an autocorrelation function for each different detection region; and
determine, from the autocorrelation functions, at least one of: a particle size, an average particle size, a polydispersity and a particle size distribution; and
identify and discard, or analyse separately, intensity signals and/or autocorrelation functions corresponding with contaminants or large particles.

Each element in the sample may be imaged, via the common aperture, onto the light detector array. In the scenario where the sample is stationary and ergodic, which is required for Dynamic Light Scattering (DLS), the correlograms for each detection region (i.e. for each element of the sample) can be added.

If combined with utilising a sheet of light, the detection region can be made relatively large and imaged simultaneously using a plurality of light detectors. Such a set-up effectively records data from multiple individual speckles or coherence area. This is equivalent to collecting scattered light from the sample with a plurality of single-mode fibres arranged to detect scattered light from different illuminated regions of the sample. In an arrangement with a single detector, it may be necessary for a measurement to capture a sufficient amount of scattered light to enable a sufficiently high signal to noise ratio in a correlogram derived from the detected scattered light for an analysis to be performed. Where detection is split into sub-runs of relatively short duration, a number of sub-runs may be necessary to gather sufficient scattering information for a measurement to be performed. As a rule of thumb, a normal DLS measurement would typically consist of 10 or so sub-runs (with duration of 0.5 to 1 second for example). If 10 separate coherence areas were to be imaged at once, then there is only a need to record data for a single sub-run.

In some embodiments, the apparatus may be configured to determine an image or a video of a diffusion coefficient by analysing an output from each light detector separately. Computational image reconstruction may be used to interpolate an image from a relatively sparse sampling over the region to be imaged.

A sequence of time separated spatially resolved measurements of diffusion coefficient may enable the investigation of viscometry and gelling domain studies in two and three dimensions. Tracer particles may be used to enable investigation of micro-scale flow past bluff objects and close to surfaces. The apparatus may be used for these purposes, and configured to perform such measurements. The characterisation of hindered diffusion close to static or slowly moving objects is of interest to understand how micro- and nano-particle suspensions behave in lab-on-chip-devices, for example. Placement of a single, beam-steered detection channel or an integral field sequentially closer to a static or slowly moving surface would allow such characterisation with further application to sorption of proteins and surfactants at oil-water interfaces and the rheology of the air-water interface.

If two or more viscous dispersions were mixed, each with a separate tracer particle, well-differentiated from tracer species in all other components of the mixture, then time-lapse video studies of diffusive mixing would be enabled for a large range of naturally occurring and man-made systems, such as emulsions.

In some embodiments a variable focal power element may be included in the detector path, configured to vary a volume of the detection region within the sample that corresponds with each light detector. In some embodiments the apparatus may be configured to match a single coherence area in the object plane so that different portions of the single coherence area are sampled by different detectors. In other embodiments the light detectors may sample scattered light from more than one coherence area.

Small particles diffuse quickly and therefore result in fluctuations in scattered light that have a short time constant, and therefore light scattering from small particles populate only a small number of correlator channels corresponding with short delay times (a correlator channel corresponding with a delay time of the autocorrelation function). For weakly scattering samples, a larger subset of an array of light detectors (e.g. starting to explore more than one coherence area) may be used to collect more scattered light, and provide a better signal to noise ratio in the generated correlogram.

In the past, similar results have been achieved by using a few-mode fibre. However, this causes a reduction in the intercept due to the modes interfering with each other slightly out of phase at the detector, due to intermodal dispersion.

These and other aspects of the invention will be apparent from, and elucidated with reference to, the embodiments described hereinafter.

### Brief Description of Drawings

Embodiments will be described, by way of example only, with reference to the drawings, in which:
Figure 1 is a schematic diagram of a light scattering particle characterisation apparatus;
Figure 2 is a schematic diagram of a light scattering detection arrangement;
Figure 3 is a schematic diagram of a light scattering particle characterisation apparatus in accordance with an embodiment;
Figure 4 is a schematic diagram of a light scattering particle characterisation apparatus in accordance with an alternative embodiment;
Figure 5 is a schematic diagram of a light scattering particle characterisation apparatus in accordance with a further alternative embodiment;
Figure 6 is a schematic diagram of a light scattering particle characterisation apparatus in accordance with a further alternative embodiment;
Figure 7 is a schematic diagram of a light scattering particle characterisation apparatus in accordance with a further alternative embodiment;
Figures 8a to 8d are schematic diagrams of methods of altering the size and shape of a light beam, suitable for use with any embodiment;
Figure 9 is a schematic of an instrument comprising a detector, processor and display; and
Figure 10 is a schematic of differential dynamic microscopy, which is an application for certain embodiments.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### Detailed Description

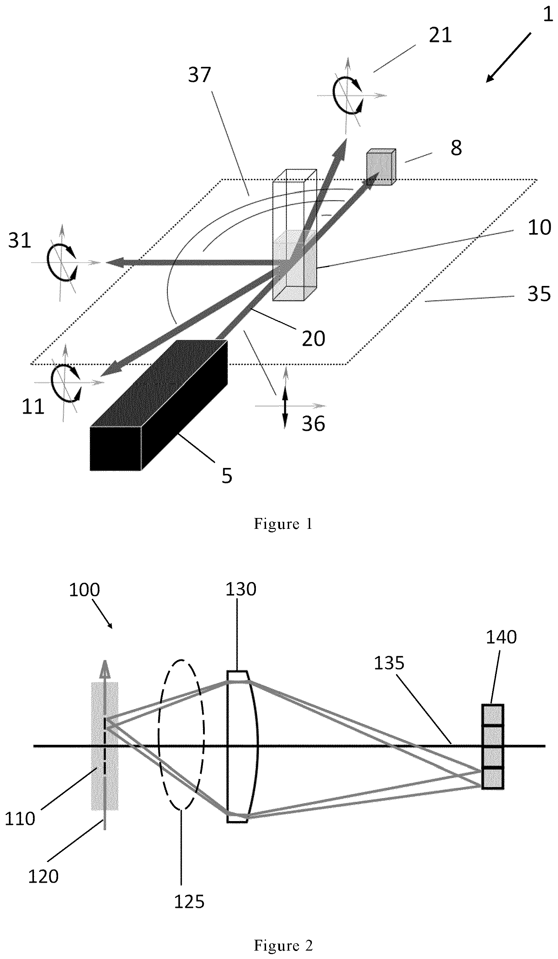

Referring to Figure 1, a light scattering particle characterisation apparatus 1 is shown, comprising a light source 5 and sample cell 10. The light source 5 (which is typically a laser) is configured to produce an illuminating light beam 20, which illuminates a sample in the sample cell 10. The sample comprises particles suspended in a fluid dispersant (e.g. a liquid such as water), and the illuminating light beam is scattered when it interacts with the particles, thereby producing scattered light. The illuminating light beam 20 typically has a linear polarisation state 36 (in this case, indicated as vertical, but other polarisation states are also possible). A scattering plane 35 may be defined, normal to the linear polarisation orientation 36 of the illuminating light beam 20. The scattered light propagates from the particles in the sample at a range of angles, relative to the illuminating light beam 20. It is convenient to define a scattering angle θ, 37 as the angle between the direction of propagation of the scattered light and the illuminating light beam measured in the scattering plane 35. Forward scattered light 21 has a direction at an acute scattering angle, side scattered light 31 has a scattering angle of ~90 degrees and back scattered light 11 has an obtuse scattering angle. A beam trap 8 may be provided to trap the illuminating light beam 20 after it has passed through the sample (and optionally to monitor the power of the illuminating light beam). One or more detectors may be provided, arranged to detect the scattered light. Each such detector will receive scattered light from a detection optical path that may be defined by one or more optical elements between the detector and the sample. The intersection of the detection optical path and the illuminating light beam defines the region of the sample from which scattered light is detected (by the detector corresponding with the respective optical path). The scattering volume will be affected by the scattering angle and the cross sections of the illumination and detection optical paths.

In dynamic light scattering (DLS), a time history of the intensity of scattered light is used to infer particle properties. The temporal fluctuations of the intensity are related to particle size, with smaller particles resulting in fluctuations with a shorter characteristic timescale than larger particles (due to Brownian motion). The intensity of scattered light is typically autocorrelated to produce an autocorrelation function (or equivalently, a Fourier transformation based approach may be used). A fit to the autocorrelation function can be used to determine an average particle size, a polydispersity and/or a particle size distribution (e.g. using well-known techniques such as the cumulant method or the CONTIN algorithm). A computer typically receives scattering data (e.g. a set of photon arrival times) from a detector, which is used to infer a time history of the intensity of scattered light at the detector (e.g. by binning the photon arrival times).

In Dynamic Light Scattering (DLS) the illuminating light beam 20 is temporally and spatially coherent, and one or more detectors (not shown in Figure 1) are arranged to detect light that is scattered at a relatively well defined single scattering angle *θ.* The range of scattering angles received at a detector will be non-zero, but will typically be less than 5 degrees, less than 2 degrees or less than 1 degree. Depolarised DLS requires a polarising filter that is used to filter the polarisation state of the detected scattered light, and requires that both parallel and perpendicular linear polarisation states are detected, relative to the polarisation state of the illuminating light beam.

For DLS, the scattering volume is typically a small fraction of the sample volume contained in the sample cell. If the scattering volume is larger than a single coherence area of the optical system (comprising the illumination and detection optical paths), there will be an increase in the uncorrelated fraction of the collected signal. An increase in this uncorrelated fraction will affect the uncorrelated baseline in an autocorrelation function determined from the detector output. Since a fit to an autocorrelation function is typically used to infer particle characteristics (e.g. size) this increase leads to greater measurement uncertainty.

The present disclosure relates to enabling parallel detection of scattered light (suitable for DLS) from more than one position in a sample, or more generally, from more than one spatial location (e.g. parallel well plate DLS detection). In some embodiments, array type detection arrangements may be used, in which an array of detectors (which may be close together, on a focal plane array) receive scattered light with the same (or equivalent) scattering angle, from different spatial locations (e.g. in the same sample, or from different samples).

Referring to Figure 2, a light scattering particle characterisation apparatus 100 is shown, in which a sample within a sample cell 110 is illuminated by illumination beam 120 along an illumination path. A plurality of light detectors 140 are configured to receive side-scattered light 125, resulting from the interaction between the illumination beam 120 and sample, along a detector path. A lens 130 is configured to collect the scattered light 125 and couple said light 125 to the detector 140. The lens 130 is arranged such that the optical axis 135 of the lens is perpendicular to the illumination beam. In this arrangement, the range of scattering angles arriving at a particular detector 140 depends on the clear aperture of the lens 130 and the distance of the scattering volume (the intersection of illumination beam 120 and detection optical path) from the lens 130.

This approach of using a simple imaging lens to collect the scattered light leaves room for improvement in the control of the range of angles over which scattered light is detected. Average collection angles at each detector 140 will depend on the field angle of the centre of the scattering area (defined by the field window for the detector). Because the lens is producing an image of the scattering area there will not be any mixing of light from adjacent scattering areas, but the collection angle (i.e. the mean scattering angle detected by the detector) will not be the same for each detector.

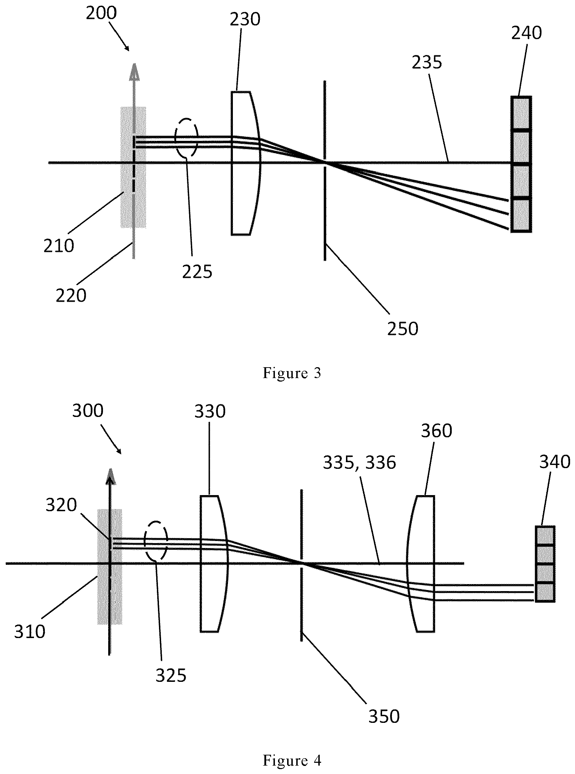

Referring to Figure 3, a light scattering particle characterisation apparatus 200 in accordance with an embodiment is shown. Sample cell 210 holds a sample, which is illuminated with illuminating beam 220. Scattered light 225 is produced from the interaction between the illuminating beam 220 and the sample. Common lens 230 (in this example, having optical axis 235 substantially normal to the illumination beam 220) collects the scattered light 225. The apparatus also comprises a plurality of light detectors 240 (e.g. arranged in a 1D or 2D array), each light detector 240 configured to receive the side-scattered light 225 from a different detection region of the scattering volume along a respective detector path. A common aperture 250 is positioned on the optical axis 235 of the lens 230. The aperture 250 is arranged to couple the scattered light 225 from each detector path to the corresponding light detector 240 and to define a range of scattering angles detected at each of the plurality of light detectors 240. The aperture 250 is positioned at the back focal plane of the common lens 230. The combination of aperture 250 and lens 230 results in different detector locations sampling the same relatively narrow range of scattering angles from different locations within the sample. Since the detected light all shares the same well defined scattering angle, it is straightforward to combine the measurement information thereby obtained in order to perform a more rapid, or more reliable dynamic light scattering measurement. For example, autocorrelation functions obtained from each detector may be summed or averaged before performing a fit to determine a particle characteristic.

Furthermore, since the optical system is telecentric with respect to the object/sample, it is straightforward to collect light at scattering angles other than 90 degrees (to the illumination beam), by tilting the illumination beam relative to the detection optical paths. Any such relative tilt may be within the scattering plane or out of the scattering plane. The scattering plane may be defined as a plane that includes the illumination beam and which is normal to the linear polarisation of the illuminating beam. Out of scattering plane tilt may be advantageous in managing back reflections, which tend to increase optical noise (e.g. introducing uncorrelated scattered light and consequently increasing the intercept of a normalised correlogram).

It is possible to use an elliptical aperture 250, placed at the conjugate of the imaging system so that scattering angles of detection in the sample that are not at 90 degrees to the illumination beam map onto a circular detection area in the sample. This may be particularly applicable to ID detector arrays.

Referring to Figure 4, a light scattering particle characterisation apparatus 300 in accordance with an alternative embodiment is shown. In common with Figure 3, sample cell 310 holds a sample, which is illuminated with an illuminating beam 320. Like the embodiment of Figure 3, a first common lens 330 collects the scattered light 325, and a common aperture 350 (positioned on the optical axis 335 of the lens 330) is arranged to couple the scattered light 325 from each detector path to the corresponding light detector 340 and to define a range of scattering angles detected at each of the light detectors 340 (which may be pixels of a detector array).

The apparatus 300 also includes a second common lens 360. The optical axis 336 of the second common lens 360 is coincident with the optical axis 335 of the first common lens 330, and normal to the illumination beam (for side scatter detection - for other detection angles the axis of the lenses 330, 360 will not be normal to the illumination beam). The first common lens 330 is positioned between the sample cell 310 and the aperture 350, with the second common lens 360 positioned between the aperture 350 and the plurality of detectors 340. The second common lens 360 may cause light incident at each detector 340 to be parallel to the optical axis 335, which may be advantageous in some contexts.

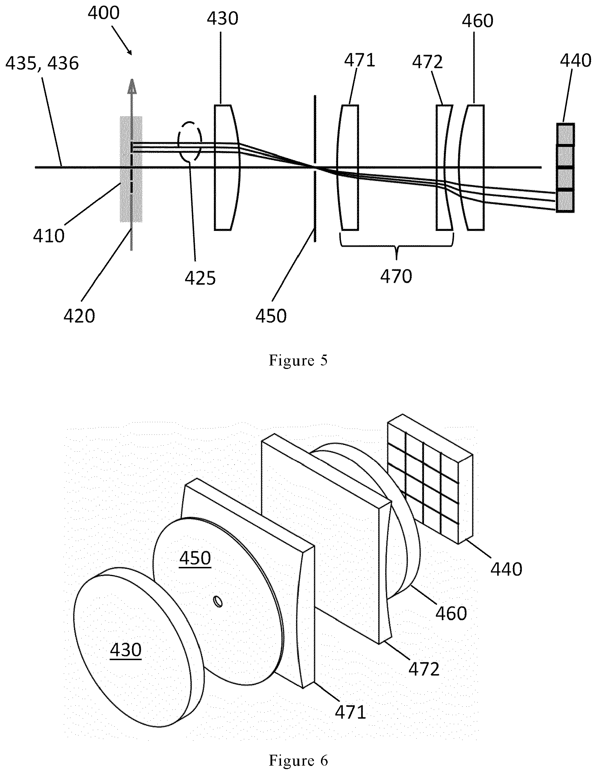

An alternative embodiment of a light scattering particle characterisation apparatus 400 is illustrated in Figure 5. This embodiment is substantially similar to the embodiment shown in Figure 4. All of the components of Figure 4 (e.g. the two common lenses 430, 460 and common aperture 450) are present in the same arrangement as that of Figure 4. The apparatus 400 further comprises a second pair of lenses 470, comprising a positive cylindrical lens 471 and a negative cylindrical lens 472. These are positioned between the aperture 450 and second common lens 460, and aligned such that the optical axis of the second pair of lenses 470 is coincident with the respective optical axes 435, 436 of the first common lens 430 and second common lens 460.

The back focal plane of the positive lens 471 and the back focal plane of the negative lens 472 of the further pair of common lenses 470 are coincident.

This arrangement allows the proportions of the image formed on the plurality of light detectors 440 to be altered. The further pair of lenses 470 are positioned between the first and second common lenses 430, 460, in the infinite conjugate space between the lenses 430, 460. This ensures that no astigmatism is added to any final image. The combination of the positive and negative lenses 471, 472 provides angular magnification in one plane, so can be used to expand the field window of the detectors in one dimension only. This enables an elliptical aperture to correct for any tilting of the collection angle in the sample with respect to the illuminating beam over a complete 2D array.

Figure 6 illustrates an example apparatus similar to that shown on Figure 5, in which a 2D array of detectors is used. The sample and scattered light paths are not shown.

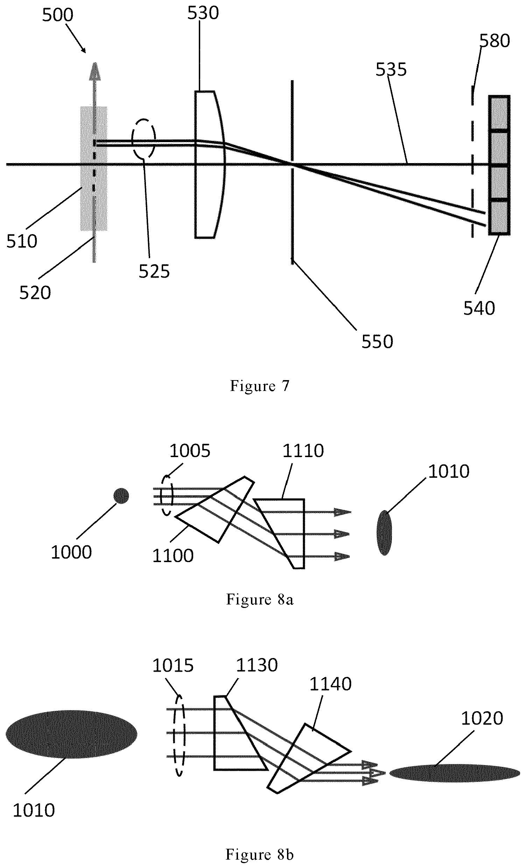

Referring to Figure 7, an alternative embodiment of a light scattering particle characterisation apparatus 500 is illustrated. This apparatus is substantially similar to that of Figure 3. The components used in the embodiment of Figure 3 are used in the embodiment of Figure 7 (e.g. the common lens 530, the common aperture 550 and the sample cell 510). The apparatus further comprises a mask 580 positioned in front of the plurality of light detectors 540 (i.e. between the common aperture 550 and the detectors 540). The mask 580 comprises a plurality of apertures. Each aperture in the mask 580 corresponds with a detector 540, and defines the size and shape of the detection region for the corresponding detector. In the illustrated embodiment, the mask is positioned such that a gap between the mask and the detectors is present, although it can be appreciated that the mask could be placed directly on the plurality of detectors. In some embodiments the mask may be curved, for example to match the Petzval curvature of the lens 530. Such a mask may be used in any embodiment of the invention (including those with more lenses).

The aperture in the detector mask 580 may be scaled to correct for a change in energy associated with off-axis illumination of the common aperture 550. A significantly off-axis spatial element will "see" the common aperture 550 as an ellipse. The further away from the axis of the common aperture 550, the higher the aspect ratio of the ellipse will be (as a result of the short axis getting smaller as the long axis remains constant). The further off-axis the detector element is, the lower the scattering energy collected from the sample as a result of the common aperture. The scaling of apertures in the detector mask 580 may avoid issues with the dynamic range of the detector. An optimum level for illumination intensity may be more straightforward to achieve when the detector optical paths are arranged to normalise the intensity of the scattered light at each detector. Some detectors may have a range in which they are linear, and above which their linearity tends to degrade (e.g. due to saturation).

Although Figures 3 to 7 depict arrangements in which the illuminating light beam passes approximately through the centre of the sample cell, this is not essential. Some embodiments include a translation stage on which the sample cell is mounted, so that the distance from the light beam to the wall of the sample cell can be adjusted.

Suitable detectors for dynamic light scattering may be subject to saturation or non-linearity, where further increases in incident light intensity do not result in a linearly proportional increase in output from the detector. A variable attenuator may be used to control the average intensity at the detectors. The variable attenuator may be placed: in a collimated portion of the detector path (e.g. between the sample and collection lens); at, or close to, the aperture; at, or close to, the illuminating light source/sources, prior to the sample.

There may be a variation in the intensity of scattered light over the region of the sample from which scattered light is detected (the scattering volume). This is particularly the case with embodiments in which the scattering region is relatively large: a large particle will scatter light very strongly, which may saturate detectors that receive scattered light from the large particle.

Since the autocorrelation function is populated as the square of the count-rate, a variation in scattering intensity over the detectors may mean that characterisation of brighter regions is complete before (or more heavily weighted) than less brightly scattering regions (assuming that the analysis can proceed when a certain number of photons have been received, for example). In some embodiments attenuation (or detector sensitivity) may be adjustable to have different values for different detectors. For example a spatial light modulator may be used to provide variable attenuation over the detectors. Alternatively (or in addition), detectors with controllable quantum efficiency may be used, and a control scheme applied in which high flux at a detector results in automatic decreasing of detector efficiency at that detector.

In certain embodiments, a fluorescence filter may be used to remove fluorescent light (which will not be coherent or correlated). A removable fluorescence filter may be used, which may be at or near the aperture (thereby reducing the size of the filter and consequently the requirements for any translation stage for moving the filter in and out of the optical path.

In certain embodiments, a horizontal and vertical polariser may be provided, configured to be selectively interposed in the detection optical path so as to enable horizontally polarised scattered light to be detected separately from vertically polarised light (and vice versa). This enables DDLS (or depolarised dynamic light scattering) measurements to be performed which can reveal the shape and/or anisotropy of particles comprising a sample. Such polarising filters may conveniently be positioned near the aperture (for similar reasons to the fluorescence filter). In some embodiments different detectors in the plurality of detectors may be respectively provided with vertical and horizontal polarising filters, thereby enabling simultaneous measurement of both polarisation components of the scattered light. This may enable very fast measurements of protein unfolding events, conformal changes in molecules and aggregation routes (for example in a time-resolved sequence of relatively short measurements with durations in the order of milliseconds or microseconds).

Referring to Figures 8a and 8b, an arrangement configured to manipulate the size and shape of an illumination beam 1000 are shown. In Figure 8a, a pair of prisms 1100 and 1110 is used to expand one axis of the round illumination beam 1000 and into an elliptical beam 1010, visualised using rays 1005. In Figure 8b, the same process is performed in reverse. A pair of prisms 1130 and 1140, which could be in the same arrangement as prisms 1100 and 1110 and have the same optical properties, is used to compress one axis of the elliptical beam 1010 to produce a thinner elliptical beam 1020. If used in combination, it is anticipated that the compressed axis of the elliptical beam 1010 will be the axis perpendicular to the axis expanded to produce the elliptical beam 1010 from the round beam 1000.

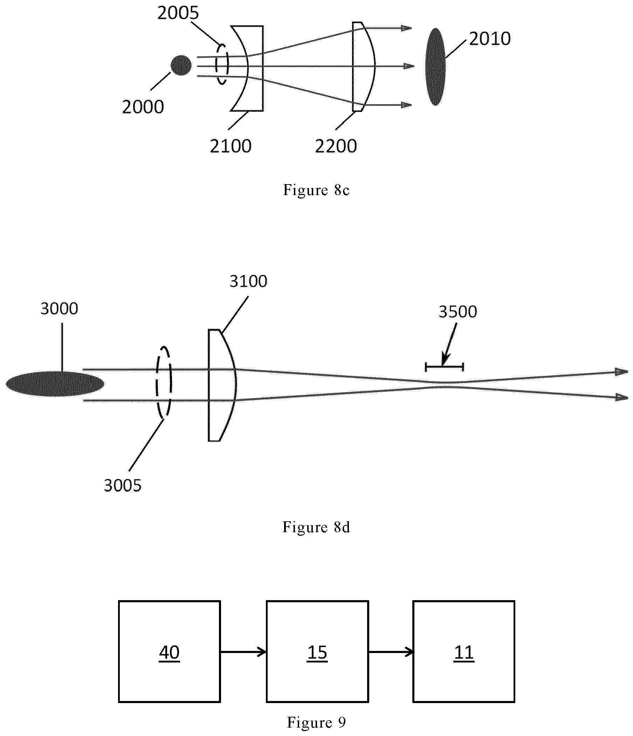

Referring to Figure 8c, an alternative arrangement for manipulating the size and shape of an illumination beam 2000 is shown. A pair of lenses, comprising a negative cylindrical lens 2100 and a positive cylindrical lens 2200, is used to expand one axis of the round beam 2000 to produce an elliptical beam 2010. This technique is used in laser velocimetry.

An alternative method of manipulating the size and shape of illumination beam (not pictured) involves the use of a pair of toric lenses. However, toric lenses are expensive and much more difficult to control in manufacturing than cylindrical lenses. It is also difficult to design a pair of toric lenses to expand a beam in one dimension and contract it in the other dimension.

It would be possible to combine the arrangements of Figures 8a to 8c to adjust the size of an illumination beam 1000, 2000. Two arrangements could be mounted orthogonally, allowing a user to adjust the laser beam to any required size. A first arrangement would adjust a first axis of the beam 1000, 2000 and a second arrangement would adjust a second orthogonal axis. For example, a Helium Neon laser with a 0.63mm 1/e² beam diameter could be expanded in one dimension out to 1.26mm using the apparatus of Figure 8a. The beam would retain the 0.63mm dimension in the centre of the elliptical beam. The laser could then be passed through a second beam conditioning unit (e.g. the apparatus of Figure 8b) with the optical components rotated by 90 degrees around the optical axis and expand or contract the 0.63mm dimension of the beam to any desired value.

However, altering the beam dimensions alters the laser waist in orthogonal directions - effectively introducing astigmatism into the altered beam 1010, 1020, 2010. To bring the beam to a sharply focused spot further beam conditioning would be required before the beam can be focused with a spherical lens.

In Figure 8d, an arrangement for further beam conditioning is shown. A single positive cylindrical lens 3100 is provided. In this arrangement, the laser waist region 3500 of elliptical beam 3000 can be used to define the scattering volume within the sample with the minimum width. By definition, the laser waist is the region where the beam has the minimum width. The entry aperture and focal length of the cylindrical lens 3100 would be calculated to place the waist region 3500 within a sample container at the area to be characterised.

Figure 9 shows a schematic of an instrument according to an embodiment, comprising a detector 40, processor (or computer) 15 and display 11.

The detector 40 is configured to receive scattered light from a range of scattering locations in a sample, for example, as described with reference to any of Figures 3 to 7. The detector 40 provides a time history of scattered light intensity incident at the detector 40, for example, a set of photon arrival times. The photon arrival times may be temporally binned by the processor 15 to produce an intensity signal from each detector 40. The intensity signals may be autocorrelated to produce an autocorrelation function for each detector. Each autocorrelation function may be inverted (e.g. with a cumulants analysis, NNLS, CONTIN algorithm, etc) to determine at least one of a z average particle size, polydispersity and particle size distribution.

The measurement data for each detector may be analysed by the processor 15 to check for large particles (e.g. a contaminant or aggregate). Such particles can make measurements for smaller particles less reliable. For example, the scattering intensity may be autocorrelated and a cumulants analysis used to determine a polydispersity for each measurement location. A threshold polydispersity may be used to classify measurements as including large particles and not including large particles. The threshold may be determined dynamically, based on the distribution of polydispersities for each of the measurement locations (e.g. a mean plus a number of standard deviations), or may be a static parameter (which may or may not be defined by a user for each analysis).

The autocorrelation functions from the measurement locations classified as not including large particles may be used to analyse the smaller particles in a sample, for example by averaging the measurements resulting from the inversion of each autocorrelation function, or by summing (or averaging) the autocorrelation functions for this group and then inverting the combined autocorrelation function. An analysis of the larger particles may be performed in the same way, based on the other group of measurements.

In some embodiments the autocorrelation functions for each detector may simply be summed, and the resulting combined autocorrelation function inverted to determine at least one of a z average particle size, polydispersity and particle size distribution.

The display 11 may be configured to display the output from the measurement (e.g. a particle size distribution) and/or a graphical user interface for performing the measurement (and setting parameters related thereto).

In some embodiments, the sample holder may comprise a well plate, and the apparatus may be configured with the different detection regions of scattering volume distributed over one or more well plates. In some embodiments the apparatus may be configured with more than one detection region for each well plate. Characterisation of samples through well plates is typically subject to variation due to variations in the optical properties and geometry of the well plate base. Sampling more than one location at each well plate may enable more reliable and higher quality measurements at each location. In some embodiments an apparatus may be configured with detection regions at each well in a well plate, enabling "one-shot" measurement of a whole well plate. In some embodiments the sample holder may comprise a slide.

In some embodiments the detectors may be arranged in a contiguous array (without gaps between detectors), or in a non-contiguous array (with gaps between detectors). In some embodiments detectors may be spatially separate but may not be arranged in an array. Some embodiments may combine one or more arrays and one or more separate detectors.

In some arrangements, a reference portion of the illuminating beam may be split from the illuminating path, and recombined at the detector (or just prior to the detector). This may be useful for heterodyne detection arrangements, and may enable the characterisation of spatially resolved fluorescence light scattering, and DLS of very small samples that diffuse quickly and populate a small number of channels in the correlator, towards zero time delay.

In differential dynamic microscopy (DDM) analysis¹, images captured from a sample by an imaging system in the time domain are used to perform an analysis that is similar to DLS. Difference images are obtained by subtracting images with different time delays. A differential intensity correlation function (DICF) can be determined from spatial Fourier transforms of the difference images. The DCIF can be processed to determine autocorrelation functions that are similar to those obtained by DLS, which can be processed in a similar way to determine particle characteristics.
¹ Wilson, Laurence G., et al. "Differential dynamic microscopy of bacterial motiliy."Physical review letters106, 1 (2011): 018101.

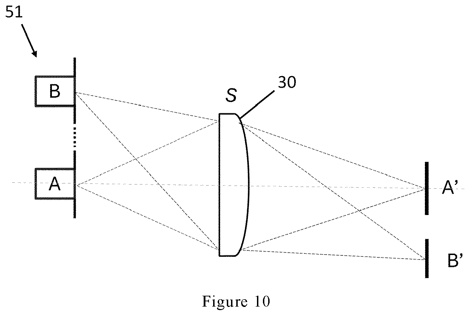

Figure 10 illustrates schematically an object comprising positions A and B, transferred to positions A' and B' at the detector by optical system S (here shown as a lens 30). It can be seen that the scattering angle measured for location A is different to location B. The object telecentric optical arrangements disclosed herein (e.g. in Figures 3 to 7) may be applied to DDM, in order to sample the same (or a similar) range of scattering angles at each position in the object space (because of the common aperture). For a fixed optical system S, the telecentric arrangement will provide a more faithful reproduction of far off-axis objects, which may be particularly applicable in well plate imaging.

From reading the present disclosure, other variations and modifications will be apparent to the skilled person. Such variations and modifications may involve equivalent and other features which are already known in the art of particle characterisation, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, and reference signs in the claims shall not be construed as limiting the scope of the claims.

## Claims

1. An apparatus for particle characterisation, comprising:
a sample cell for holding a sample;
a light source configured to illuminate the sample with an illuminating beam and to produce scattered light from the interaction between the illuminating beam and the sample in a scattering volume;
a plurality of light detectors, each light detector configured to receive scattered light from a different detection region of the scattering volume along a respective detector path;
a common lens for each detector path configured to collect the scattered light; and
a common aperture arranged to couple light from each detector path to the corresponding light detector and to define a range of scattering angles detected at each of the plurality of light detectors.

2. The apparatus of claim 1, wherein the common aperture is arranged on a back focal plane of the common lens, so that the apparatus is object-space telecentric.

3. The apparatus of claim 1 or 2, wherein the common lens is a first common lens, and the apparatus further comprises a second common lens for each detector path, wherein:
the optical axis of the second common lens is coincident with the optical axis of the first common lens; and
the first common lens is positioned between the sample cell and the common aperture, and the second common lens is positioned between the common aperture and the plurality of light detectors.

4. The apparatus of claim 3, wherein the common aperture is arranged on a back focal plane of the first common lens and on a front focal plane of the second common lens, so that the apparatus is object-space telecentric and image-space telecentric.

5. The apparatus of claim 3 or 4, further comprising:
a further pair of common lenses for each detector path, the further pair of common lenses positioned between the second common lens and the common aperture.

6. The apparatus of claim 5, wherein the further pair of common lenses comprises a positive lens and a negative lens; and
the further pair of common lenses are positioned such that a back focal plane of the positive lens of the further pair of common lenses and a back focal plane of the negative lens of the further pair of common lenses are coincident.

7. The apparatus of claim 5, wherein the further pair of common lenses comprises a pair of positive lenses; and
the further pair of lenses are arranged such that a focal plane of one of the further pair of common lenses is coincident with a focal plane of the other of the further pair of common lenses.

8. The apparatus of any preceding claim, further comprising:
a mask positioned on or adjacent to the plurality of light detectors, wherein the mask comprises a plurality of apertures, each aperture corresponding with a light detector and defining the size and shape of the detection region for the corresponding light detector.

9. The apparatus of claim 8, wherein each mask aperture is smaller than the active area of each corresponding light detector, so that the detection region for each light detector is separated from the detection region of the adjacent light detector.

10. The apparatus of claim 8 or 9, wherein there is a gap between the mask and the light detectors; and
the size and shape of the mask apertures can be varied in response to an electronic control signal.

11. The apparatus of claim 10, comprising a carousel comprising two or more masks and arranged to rotate to replace the mask positioned adjacent to the plurality of light detectors in response to the electronic control signal.

12. The apparatus of any preceding claim, wherein the illuminating beam comprises a sheet of light configured to illuminate a plane of the sample.

13. The apparatus of claim 12, wherein a pair of prisms are disposed between the light source and the sample cell, the pair of prisms configured to manipulate the shape of the illumination beam to approximate the sheet of light in the sample.

14. The apparatus of any preceding claim, wherein the plurality of light detectors comprise a plurality and/or an array of avalanche photodiodes, APDs.

15. The apparatus of any preceding claim, wherein each light detector is configured to produce an intensity signal in response to the detected scattered light; and
the apparatus further comprises a processor configured to:
autocorrelate each intensity signal to produce an autocorrelation function for each different detection region; and
determine, from the autocorrelation functions, at least one of: a particle size, an average particle size, a polydispersity and a particle size distribution; and
identify and discard, or analyse separately, intensity signals and/or autocorrelation functions corresponding with contaminants or large particles.
